# EUROPÄISCHE PATENTSCHRIFT

(11) **EP 3 263 338 B1**
(45) Veröffentlichungstag und Bekanntmachung des Hinweises auf die Patenterteilung: **05.10.2022**
(21) Anmeldenummer: 17178266.7
(22) Anmeldetag: 28.06.2017
(51) Int. Cl.: B33Y 10/00, B33Y 30/00, B22F 3/105, B29C 64/153, B29C 64/218, B29C 64/241, B22F 10/20, B22F 12/00, B29C 64/135

(54) **VERFAHREN ZUM GENERATIVEN HERSTELLEN EINES DREIDIMENSIONALEN OBJEKTS**
METHOD FOR GENERATING A THREE-DIMENSIONAL OBJECT
PROCÉDÉ DE FABRICATION ADDITIVE D'UN OBJET TRIDIMENSIONNEL

(30) Priorität: 30.06.2016 DE 102016211949
(43) Veröffentlichungstag der Anmeldung: 03.01.2018
(73) Patentinhaber: EOS GmbH Electro Optical Systems, 82152 Krailling (DE)
(72) Erfinder: PERRET, Hans, 81543 München (DE); MARKL, Stefanie, 80687 München (DE)
(74) Vertreter: Prüfer & Partner mbB Patentanwälte · Rechtsanwälte

(56) Entgegenhaltungen:
- WO-A1-2015/082677
- DE-A1-102014 222 129
- US-A1- 2001 050 448
- US-A1- 2008 156 263
- US-A1- 2012 164 322
- US-A1- 2014 363 585

## Beschreibung

Die vorliegende Erfindung bezieht sich auf ein Verfahren zum generativen Herstellen eines dreidimensionalen Objekts durch schichtweises Aufbringen und selektives Verfestigen eines Aufbaumaterials, vorzugsweise eines Pulvers, insbesondere auf eine in der Vorrichtung enthaltene und für das Verfahren verwendete Beschichtungseinheit bzw. einen damit ausgerüsteten Beschichter sowie auf ein Beschichtungsverfahren. Vorrichtungen und Verfahren dieser Art werden beispielsweise beim Rapid Prototyping, Rapid Tooling oder Additive Manufacturing verwendet. Ein Beispiel eines solchen Verfahrens ist unter dem Namen "Selektives Lasersintern oder Laserschmelzen" bekannt. Dabei wird wiederholt eine dünne Schicht eines pulverförmigen Aufbaumaterials aufgebracht und das Aufbaumaterial in jeder Schicht durch selektives Bestrahlen von einem Querschnitt des herzustellenden Objekts entsprechenden Stellen mit einem Laserstrahl selektiv verfestigt.

WO 2013/092757 A1 beschreibt eine Vorrichtung und ein Verfahren zum generativen Herstellen eines dreidimensionalen Objekts aus Pulver. In einer Ausführungsform wird das Pulver über eine Pulverzufuhr, die eine Dosierwalze enthält und über ein Baufeld verfährt, auf das Baufeld aufgetragen. Das aufgebrachte Pulver wird von einer hinter der Pulverzufuhr fahrenden höhenverstellbaren Verteilungswalze zu einer gleichmäßigen Schicht ausgezogen und durch eine nachfolgende Verdichtungswalze, die näher an dem Baufeld angeordnet ist als die Verteilungswalze, verdichtet, wobei die Schichtdicke verringert wird. Die Beschichtungsrichtung ist durch die Abfolge der Walzen fest vorgegeben.

US 2012/164322 A1 beschreibt einen Beschichter zum Aufbringen einer dünnen Aufbaumaterialschicht in einer Lasersinter- oder Laserschmelzvorrichtung. Der Beschichter umfasst eine Walze, die über einen Ablagerungsbereich verfahren wird um dort eine Pulverschicht aufzubringen. Mittels einer zweiten Walze kann das aufgebrachte Pulvermaterial zusätzlich verdichtet werden.

Die Aufgabe der vorliegenden Erfindung besteht darin, ein alternatives bzw. verbessertes Beschichtungs- bzw. Herstellungsverfahren für ein dreidimensionales Objekt durch schichtweises Aufbringen und selektives Verfestigen eines Aufbaumaterials bereitzustellen, bei denen die Beschichtungsrichtung verändert werden kann.

Diese Aufgabe wird gelöst durch ein Beschichtungsverfahren gemäß Anspruch 1 und ein Herstellungsverfahren gemäß Anspruch 10.

Weiterbildungen der Erfindung sind jeweils in den Unteransprüchen angegeben. Dabei können die Verfahren auch durch die untenstehenden Merkmale der Vorrichtungen weitergebildet sein, bzw. die Merkmale der Verfahren können auch untereinander zur Weiterbildung genutzt werden.

Die offenbarungsgemässe Beschichtungseinheit dient zum Aus- und/oder Nachrüsten einer Vorrichtung zum generativen Herstellen eines dreidimensionalen Objekts durch selektives schichtweises Verfestigen eines Aufbaumaterials, vorzugsweise eines Pulvers, wobei die Vorrichtung einen über ein Baufeld bewegbaren Beschichter zum Aufbringen einer Schicht des Aufbaumaterials innerhalb des Baufelds und eine Verfestigungsvorrichtung zum selektiven Verfestigen der aufgebrachten Schicht an Stellen, die einem Querschnitt des herzustellenden Objekts entsprechen, enthält und dazu ausgebildet und/oder gesteuert ist, die Schritte des Aufbringens und des selektiven Verfestigens zu wiederholen, bis das Objekt fertiggestellt ist. Die Beschichtungseinheit enthält zumindest zwei in einer ersten Richtung voneinander beabstandete und sich in eine zweite Richtung quer, vorzugsweise senkrecht zu der ersten Richtung erstreckende Beschichtungswalzen, wobei mindestens eine der Beschichtungswalzen, bevorzugt beide Beschichtungswalzen in einer senkrecht zu der ersten und der zweiten Richtung verlaufenden dritten Richtung verstellbar in der Beschichtungseinheit ausgebildet sind. Mit einer solchen Beschichtungseinheit können beispielsweise Aufbringen und Verdichten einer Materialschicht voneinander getrennt jeweils durch eigene Walzen bewirkt werden, wobei die Beschichtungseinheit aber dennoch in einander entgegengesetzten Beschichtungsrichtungen verwendet werden kann.

Vorzugsweise ist die zumindest eine Beschichtungswalze und/oder sind beide Beschichtungswalzen dergestalt in der dritten Richtung verstellbar ausgebildet, dass in einer ersten Stellung eine erste der zumindest zwei Beschichtungswalzen weiter in die dritte Richtung vorsteht als eine zweite der zumindest zwei Beschichtungswalzen und in einer zweiten Stellung die zweite Beschichtungswalze weiter in die dritte Richtung vorsteht als die erste Beschichtungswalze. Dadurch kann beispielsweise auch bei Beschichtung in einander entgegengesetzten Beschichtungsrichtungen sichergestellt sein, dass die jeweils nachlaufende Walze immer näher an dem Baufeld angeordnet werden kann als die jeweils vorlaufende Walze.

Vorzugsweise weisen die beiden Beschichtungswalzen denselben Durchmesser auf. Dadurch kann beispielsweise eine gleichartige Beschichtung in beiden Beschichtungsrichtungen durchgeführt werden.

Vorzugsweise sind die beiden Beschichtungswalzen unabhängig voneinander antreibbar in der Beschichtungseinheit angeordnet. Dadurch können beispielsweise Drehrichtung und -geschwindigkeit der beiden Beschichtungswalzen unabhängig voneinander eingestellt werden. Alternativ können die beiden Beschichtungswalzen auch zusammen (d.h. gekoppelt) antreibbar sein. Dies kann beispielsweise den mechanischen Aufbau der Beschichtungseinheit vereinfachen.

Vorzugsweise sind bei der die beiden Beschichtungswalzen in ihrer Bewegung in oder gegen die dritte Richtung miteinander gekoppelt in der Beschichtungseinheit angeordnet. Dadurch kann beispielsweise ein Vertauschen der Höhenpositionen beider Beschichtungswalzen über einen einzelnen Antrieb erfolgen.

Der offenbarungsgemässe Beschichter dient zum Aus- und/oder Nachrüsten einer Vorrichtung zum Herstellen eines dreidimensionalen Objekts durch selektives schichtweises Verfestigen von Aufbaumaterial, vorzugsweise eines Pulvers, wobei die Vorrichtung daran angepasst ist, den Beschichter so aufzunehmen, dass er über ein Baufeld bewegbar ist zum Aufbringen einer Schicht des Aufbaumaterials innerhalb des Baufelds, eine Verfestigungsvorrichtung zum selektiven Verfestigen der aufgebrachten Schicht an Stellen, die einem Querschnitt des herzustellenden Objekts entsprechen, enthält und dazu ausgebildet und/oder gesteuert ist, die Schritte des Aufbringens und des selektiven Verfestigens zu wiederholen, bis das Objekt fertiggestellt ist. Der Beschichter enthält eine oben beschriebene Beschichtungseinheit. Mit einem solchen Beschichter können beispielsweise Aufbringen und Verdichten einer Materialschicht voneinander getrennt jeweils durch eigene Walzen bewirkt werden, wobei der Beschichter aber dennoch in einander entgegengesetzten Beschichtungsrichtungen verwendet werden kann.

Vorzugsweise umfasst die Beschichtungseinheit ein auswechselbares Beschichtungsmodul. Dadurch kann beispielsweise der Beschichter einfach an unterschiedliche Beschichtungsanforderungen je nach Art des verwendeten Materials und/oder der gewünschten Schichtdicke angepasst werden.

Die offenbarungsgemäße Herstellvorrichtung dient zum generativen Herstellen eines dreidimensionalen Objekts durch schichtweises selektives Verfestigen eines Aufbaumaterials, vorzugsweise eines Pulvers. Die Vorrichtung umfasst einen über ein Baufeld bewegbaren Beschichter zum Aufbringen einer Schicht des Aufbaumaterials innerhalb des Baufelds und eine Verfestigungsvorrichtung zum selektiven Verfestigen der aufgebrachten Schicht an Stellen, die einem Querschnitt des herzustellenden Objekts entsprechen. Die ist Vorrichtung ausgebildet und/oder gesteuert, die Schritte des Aufbringens und des selektiven Verfestigens zu wiederholen, bis das Objekt fertiggestellt ist. Der Beschichter ist als oben beschriebener Beschichter ausgebildet. Mit einer solchen Herstellvorrichtung können beispielsweise Aufbringen und Verdichten einer zum Aufbau des Objekts dienenden Materialschicht voneinander getrennt jeweils durch eigene Walzen bewirkt werden, wobei der Beschichter aber dennoch in einander entgegengesetzten Beschichtungsrichtungen verwendet werden kann.

Vorzugsweise enthält die Vorrichtung ferner eine Einrichtung zum Auftragen von Aufbaumaterial in der jeweiligen Bewegungsrichtung vor der vorlaufenden Beschichtungswalze. Dadurch kann beispielsweise das Aufbringen des zum Aufbau des Objekts dienenden Materials auf das Baufeld unabhängig von der Beschichtungseinheit durchgeführt werden.

Vorzugsweise ist die Beschichtungseinheit so in der Vorrichtung angeordnet, dass die erste Richtung die Bewegungsrichtung des Beschichters über das Baufeld ist und die dritte Richtung im Wesentlichen die Vertikale ist. Dadurch können beispielsweise das zum Aufbau des Objekts dienende Material in einer Richtung quer zu der Beschichtungseinheit zu einer Schicht ausgezogen werden und die vertikale Höheneinstellungen der Beschichtungswalzen geändert werden.

Das erfindungsgemäße Beschichtungsverfahren dient zur Durchführung in einer Vorrichtung zum generativen Herstellen eines dreidimensionalen Objekts durch selektives schichtweises Verfestigen eines Aufbaumaterials, vorzugsweise eines Pulvers, wobei die Vorrichtung einen über ein Baufeld bewegbaren Beschichter zum Aufbringen einer Schicht des Aufbaumaterials innerhalb des Baufelds und eine Verfestigungsvorrichtung zum selektiven Verfestigen der aufgebrachten Schicht an Stellen, die einem Querschnitt des herzustellenden Objekts entsprechen, enthält und dazu ausgebildet und/oder gesteuert ist, die Schritte des Aufbringens und des selektiven Verfestigens zu wiederholen, bis das Objekt fertiggestellt ist. Als Beschichtungseinheit wird eine solche Beschichtungseinheit verwendet, die zwei in einer ersten Richtung voneinander beabstandete und sich in eine zweite Richtung quer, vorzugsweise senkrecht zu der ersten Richtung erstreckende Beschichtungswalzen enthält, wobei mindestens eine der, bevorzugt beide, Beschichtungswalze(n) in einer senkrecht zu der ersten und der zweiten Richtung verlaufenden dritten Richtung verstellt werden. Bei einem solchen Beschichtungsverfahren können beispielsweise Aufbringen und Verdichten einer zum Aufbau des Objekts dienenden Materialschicht voneinander getrennt jeweils durch eigene Walzen bewirkt werden, wobei die Beschichtung aber dennoch in einander entgegengesetzten Beschichtungsrichtungen durchgeführt kann.

Je nach Bewegung der Beschichtungseinheit in die erste Richtung oder in ihre Gegenrichtung wird die in der jeweiligen Bewegungsrichtung nachlaufende Beschichtungswalze näher an der Arbeitsebene angeordnet als die vorlaufende Beschichtungswalze. Dadurch kann die jeweils vorlaufende Beschichtungswalze das Aufbaumaterial zu einer gleichmäßigen Schicht ausziehen, während die jeweils nachlaufende Beschichtungswalze die Schichtdicke der ausgezogenen Schicht verringert und/oder das Aufbaumaterial weiter glättet und/oder verdichtet.

Die Höheneinstellungen der Beschichtungswalzen werden bei einer Richtungsumkehr des Beschichters vertauscht. Dadurch kann die Beschichtungseinheit bei Richtungsumkehr an die neue Beschichtungsrichtung angepasst werden. Vorzugsweise ist der Drehsinn jeder Beschichtungswalze so gewählt, dass jede Beschichtungswalze, wenn sie die in der jeweiligen Bewegungsrichtung vorlaufende Beschichtungswalze ist, sich gegenläufig zu der jeweiligen Bewegungsrichtung dreht. Dadurch kann beispielsweise ein möglichst scherungsarmes Ausziehen des Aufbaumaterials zu einer Schicht erfolgen.

Vorzugsweise ist der Drehsinn jeder Beschichtungswalze so gewählt, dass jede Beschichtungswalze, wenn sie die in der jeweiligen Bewegungsrichtung nachlaufende Beschichtungswalze ist, stillsteht oder sich gleichläufig zu der jeweiligen Bewegungsrichtung dreht. Dadurch kann beispielsweise wirkungsvoll eine Verdichtung der ausgezogenen Schicht erzielt werden.

Das erfindungsgemäße Herstellungsverfahren dient zum generativen Herstellen eines dreidimensionalen Objekts durch schichtweises selektives Verfestigen eines Aufbaumaterials, vorzugsweise eines Pulvers. Das Verfahren enthält die Schritte des Aufbringens einer Schicht des Aufbaumaterials innerhalb eines Baufelds mittels eines über das Baufeld fahrenden Beschichters, des selektiven Verfestigens der aufgebrachten Schicht an Stellen, die einem Querschnitt des herzustellenden Objekts entsprechen, mittels einer Verfestigungsvorrichtung und des Wiederholens der Schritte des Aufbringens und des selektiven Verfestigens, bis das Objekt fertiggestellt ist. Das Aufbringen wird mithilfe eines erfindungsgemäßen Beschichtungsverfahrens durchgeführt. Dadurch können beispielsweise die Vorteile des erfindungsgemäßen Beschichtungsverfahrens beim Herstellen eines dreidimensionalen Objekts genutzt werden.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht einer Vorrichtung zum generativen Herstellen eines dreidimensionalen Objekts

- Fig. 2: ist eine schematische Schnittansicht eines Ausschnitts der in Fig. 1 gezeigten Vorrichtung beim Aufbringen einer Pulverschicht in einer ersten Beschichtungsrichtung.
- Fig. 3: ist eine schematische Schnittansicht eines Ausschnitts der in Fig. 1 gezeigten Vorrichtung beim Aufbringen einer Pulverschicht in einer zweiten Beschichtungsrichtung.

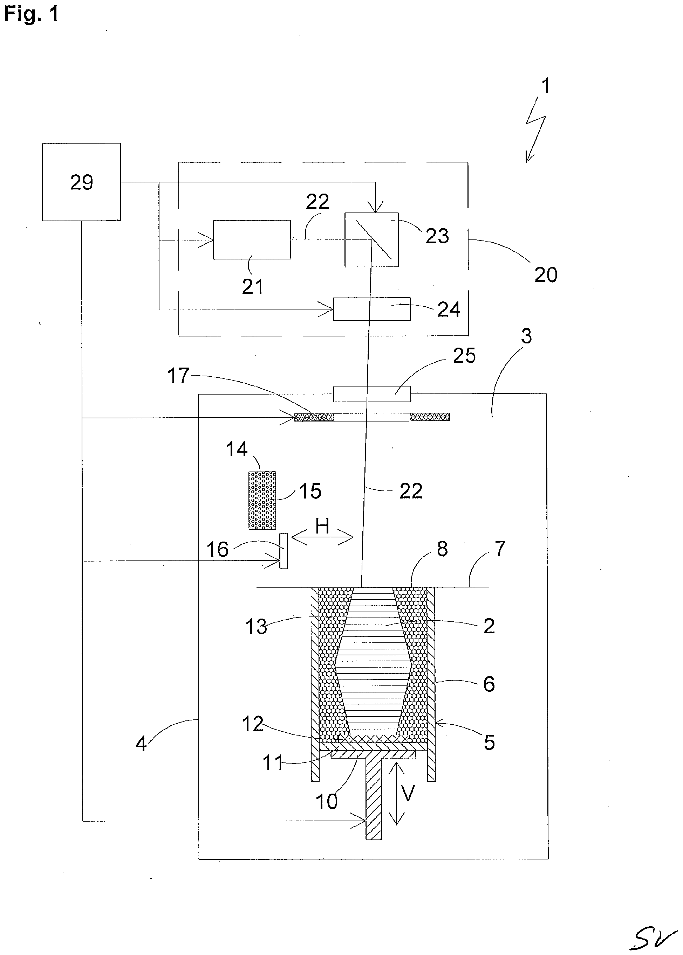

Im Folgenden wird mit Bezug auf Fig. 1 eine Ausführungsform der vorliegenden Offenbarung beschrieben. Die in Fig. 1 dargestellte Vorrichtung ist eine Lasersinter- oder Laserschmelzvorrichtung 1. Zum Aufbauen eines Objekts 2 enthält sie eine Prozesskammer 3 mit einer Kammerwandung 4.

In der Prozesskammer 3 ist ein nach oben offener Behälter 5 mit einer Behälterwandung 6 angeordnet. Durch die obere Öffnung des Behälters 5 ist eine Arbeitsebene 7 definiert, wobei der innerhalb der Öffnung liegende Bereich der Arbeitsebene 7, der zum Aufbau des Objekts 2 verwendet werden kann, als Baufeld 8 bezeichnet wird.

In dem Behälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 gebildet sein. Je nach verwendetem Pulver und Prozess kann auf der Grundplatte 11 noch eine Bauplattform 12 als Bauunterlage angebracht sein, auf der das Objekt 2 aufgebaut wird. Das Objekt 2 kann aber auch auf der Grundplatte 11 selber aufgebaut werden, die dann als Bauunterlage dient. In Fig. 1 ist das in dem Behälter 5 auf der Bauplattform 12 zu bildende Objekt 2 unterhalb der Arbeitsebene 7 in einem Zwischenzustand dargestellt mit mehreren verfestigten Schichten, umgeben von unverfestigt gebliebenem Aufbaumaterial 13.

Die Lasersintervorrichtung 1 enthält weiter einen Vorratsbehälter 14 für ein durch elektromagnetische Strahlung verfestigbares pulverförmiges Aufbaumaterial 15 und einen in einer horizontalen Richtung H bewegbaren Beschichter 16 zum Aufbringen des Aufbaumaterials 15 innerhalb des Baufelds 8. Optional ist in der Prozesskammer 3 eine Strahlungsheizung 17 angeordnet, die zum Beheizen des aufgebrachten Aufbaumaterials 15 dient. Als Strahlungsheizung 17 kann beispielsweise ein Infrarotstrahler vorgesehen sein.

Die Lasersintervorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 über ein Einkoppelfenster 25, das an der Oberseite der Prozesskammer 3 in der Kammerwandung 4 angebracht ist, auf die Arbeitsebene 7 fokussiert wird.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Alternativ kann die Steuereinheit auch teilweise oder ganz außerhalb der Vorrichtung angebracht sein. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit geladen werden kann.

Im Betrieb wird zum Aufbringen einer Pulverschicht zunächst der Träger 10 um eine Höhe abgesenkt, die der gewünschten Schichtdicke entspricht. Der Beschichter 16 fährt zunächst zu dem Vorratsbehälter 14 und nimmt aus ihm eine zum Aufbringen einer Schicht ausreichende Menge des Aufbaumaterials 15 auf. Dann fährt er über das Baufeld 8 und bringt dort eine dünne Schicht des pulverförmigen Aufbaumaterials 15 auf die Bauunterlage oder eine bereits vorher vorhandene Pulverschicht auf. Das Aufbringen erfolgt zumindest über den gesamten Querschnitt des herzustellenden Objekts 2, vorzugsweise über das gesamte Baufeld 8, also den durch die Behälterwandung 6 begrenzten Bereich. Optional wird das pulverförmige Aufbaumaterial 15 mittels einer Strahlungsheizung 17 auf eine Arbeitstemperatur aufgeheizt. Anschließend wird der Querschnitt des herzustellenden Objekts 2 von dem Laserstrahl 22 abgetastet, sodass das pulverförmige Aufbaumaterial 15 an den Stellen verfestigt wird, die dem Querschnitt des herzustellenden Objekts 2 entsprechen. Dabei werden die Pulverkörner an diesen Stellen durch die durch die Strahlung eingebrachte Energie teilweise oder vollständig aufgeschmolzen, sodass sie nach einer Abkühlung miteinander verbunden als Festkörper vorliegen. Diese Schritte werden solange wiederholt, bis das Objekt 2 fertiggestellt ist und der Prozesskammer 3 entnommen werden kann.

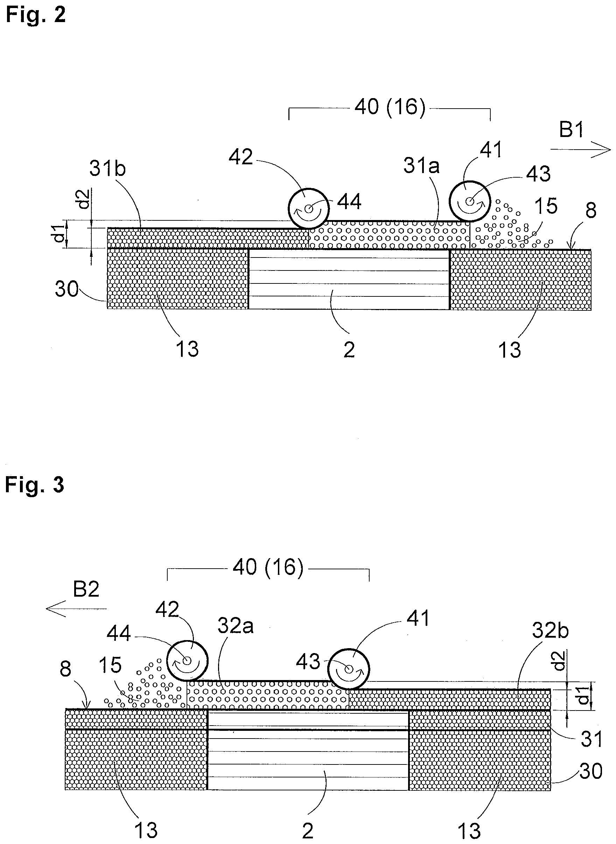

Der Vorgang der Beschichtung ist in Fig. 2 näher dargestellt. In einem durch vorangegangene Prozessschritte aufgebauten Pulverbett 30 ist der verfestigte Teil des herzustellenden Objekts 2 von unverfestigt gebliebenem Pulver 13 umgeben. Auf dieses Pulverbett 30 wird dann mittels einer Bewegung des Beschichters 16 in einer ersten Beschichtungsrichtung B1 eine weitere Pulverschicht des Aufbaumaterials 15 aufgetragen.

Wie in Fig. 2 gezeigt enthält der Beschichter 16 eine Beschichtungseinheit 40, die fest an dem Beschichter 16 angebracht oder als auswechselbares Modul gebildet sein kann. Die Beschichtungseinheit 40 enthält zwei in der ersten Beschichtungsrichtung B1 voneinander beabstandete Beschichtungswalzen 41, 42, die sich quer, vorzugsweise senkrecht zu der ersten Beschichtungsrichtung B1 parallel zum Baufeld 8 erstrecken (in der Figur senkrecht zur Zeichnungsebene) und jeweils über in ihrer Längsrichtung verlaufende Drehachsen 43, 44 drehbar gelagert sind. Beide Beschichtungswalzen 41, 42 können unabhängig voneinander zur Drehung angetrieben werden. In der vorliegenden Ausführungsform haben die beiden Beschichtungswalzen 41, 42 denselben Durchmesser, sie können aber auch unterschiedliche Durchmesser aufweisen.

Die beiden Beschichtungswalzen 41, 42 sind höhenverstellbar (also in einer vertikalen Richtung senkrecht zum Baufeld 8 verstellbar) in der Beschichtungseinheit 40 angeordnet. Die beiden Beschichtungswalzen 41, 42 können unabhängig voneinander höhenverstellbar ausgebildet sein, sie können aber auch in ihrer Höhenverstellung gekoppelt in der Beschichtungseinheit 40 angeordnet sein. Die Höhenverstellung kann beispielsweise durch Aufhängung der Walzenlagerung an Parallelprogrammen ausgeführt werden, die axial durch eine lineare Verstellung angetrieben werden. Dadurch lässt sich eine mechanische Übersetzung realisieren. Der Drehantrieb der Walze kann beispielsweise über Kupplungselemente ausgeführt werden, die die axiale Verschiebung und die geringe Höhenverstellung zulassen. Andere Möglichkeiten sind gekoppelte Exzenterelemente, die die Walzenlagerungen vertikal bewegen.

Beim Verfahren der Beschichtungseinheit 40 in der ersten Beschichtungsrichtung B1 wird die vorne liegende Beschichtungswalze 41 so angetrieben, dass sie sich mit Bezug auf die erste Beschichtungsrichtung B1 gegenläufig dreht (gegen den Uhrzeigersinn in Fig. 2). Das bedeutet, dass ihre Drehrichtung entgegengesetzt der Drehrichtung einer Walze ist, die in der ersten Beschichtungsrichtung B1 auf einer Unterlage abrollen würde.

Die vorne liegende Beschichtungswalze 41 schiebt pulverförmiges Aufbaumaterial 15, das aus einem (nicht gezeigten) Pulvervorrat am Rande des Baufelds stammt oder das von einer (nicht gezeigten) Pulverauftragseinrichtung vor der Beschichtungswalze 41 auf das Baufeld aufgetragen wird, über das Baufeld und zieht sie dadurch zu einer gleichmäßigen dünnen Pulverschicht 31a mit einer ersten Dicke d1 aus, ohne sie all zu sehr zu verdichten. Die gegenläufige Drehung der Beschichtungswalze 41 führt dabei zu einem besonders scherungsarmen und damit gleichmäßigen Schichtauftrag ohne innere Spannungen. Die erste Dicke d1 ist durch den Abstand der Unterkante der vorne liegenden Beschichtungswalze 41 von dem Pulverbett 30 bestimmt.

Die hinten liegende Beschichtungswalze 42 wird bevorzugt so angetrieben, dass sie sich mit Bezug auf die erste Beschichtungsrichtung B1 gleichläufig dreht (im Uhrzeigersinn in Fig. 2). Das bedeutet, dass ihre Drehrichtung gleichgerichtet der Drehrichtung einer Walze ist, die in der ersten Beschichtungsrichtung B1 auf einer Unterlage abrollen würde.

Die Unterkante der hinten liegenden Beschichtungswalze 42 hat einen geringeren Abstand von dem Pulverbett 30 als die Unterkante der vorne liegende Beschichtungswalze 41. Dadurch wird beim Verfahren der hinten liegenden Beschichtungswalze 42 in der ersten Beschichtungsrichtung B1 über die von der vorne liegende Beschichtungswalze 41 aufgebrachte Pulverschicht 31a eine Kraftkomponente auf das Pulver nach unten ausgeübt, wodurch die Pulverkörner zusammengedrückt und die Pulverschicht verdichtet wird. Dadurch entsteht eine verdichtete Pulverschicht 31b mit einer zweiten Dicke d2, die kleiner als die erste Dicke d1 ist. Die zweite Dicke d2 ist durch den Abstand der Unterkante der hinten liegenden Beschichtungswalze 42 von dem Pulverbett 30 bestimmt. Durch Variation der Absenkung und der Drehrichtung und -geschwindigkeit der hinten liegenden Beschichtungswalze 42 kann die Verdichtungswirkung in weiten Grenzen beeinflusst werden.

Nach dem Aufbringen und Verdichten der Pulverschicht werden die dem Querschnitt des herzustellenden Objekts in dieser Schicht entsprechenden Stellen mit dem Laserstahl belichtet, wodurch die Pulverschicht selektiv verfestigt wird.

Wie in Fig. 3 gezeigt verfährt die Beschichtungseinheit 40 anschließend in einer zweiten Beschichtungsrichtung B2 über das Baufeld 8, die der ersten Beschichtungsrichtung B1 entgegengesetzt ist. Dabei bedeutet entgegengesetzt nicht unbedingt einen Winkel von 180° in einer Draufsicht auf die Arbeitsebene, sondern nur, dass die zweite Beschichtungsrichtung B2 eine Komponente hat, die in die Gegenrichtung der ersten Beschichtungsrichtung B1 zeigt. Vorzugsweise liegt der Winkel zwischen der ersten und der zweiten Beschichtungsrichtung zwischen 150° und 210°, in weiter bevorzugter Weise beträgt er 180°.

Bei der Fahrt in die zweite Beschichtungsrichtung B2 sind die Höheneinstellungen der Beschichtungswalzen vertauscht: Die nunmehr vorlaufende Beschichtungswalze 42 hat einen größeren Abstand von der selektiv verfestigten Pulverschicht 31 als die nunmehr nachlaufende Beschichtungswalze 41.

Auch die Drehrichtungen und -geschwindigkeiten werden bei einer Richtungsumkehr des Beschichtungsmoduls 40 angepasst. So entspricht die in Fig. 3 gezeigte Drehung der nunmehr vorlaufenden Beschichtungswalze 42 im Uhrzeigersinn aufgrund der Umkehr der Beschichtungsrichtung jetzt einer gegenläufigen Drehung, während die Drehung der nunmehr nachlaufenden Beschichtungswalze 41 gegen den Uhrzeigersinn einer gleichläufigen Drehung entspricht.

Analog zu dem oben mit Bezug auf Fig. 2 beschriebenen Ablauf wird pulverförmiges Aufbaumaterial 15 von der nunmehr vorlaufenden Beschichtungswalze 42 zu einer gleichmäßigen dünnen Pulverschicht 32a mit einer ersten Dicke d1 ausgezogen. Diese Pulverschicht 32a wird dann von der nunmehr nachlaufenden Beschichtungswalze 41 verdichtet, wobei die verdichtete Pulverschicht 32b einer zweiten Dicke d2 hat, die kleiner als die erste Dicke d1 ist. Die Dicken d1 und d2 können dieselben Dicken wie die in Fig. 2 gezeigten sein oder von ihnen verschieden sein.

Anschließend wird die verdichtete Pulverschicht 32b durch den Laserstrahl 22 selektiv verfestigt, und die in Fig. 2 und 3 gezeigten Abläufe werden wiederholt, bis das Objekt 2 fertiggestellt ist.

Somit stellt die vorliegende Offenbarung eine Beschichtungseinheit bereit, bei der Aufbringen und Verdichten einer Pulverschicht voneinander getrennt jeweils durch eigene Walzen bewirkt werden, das aber dennoch in einander entgegengesetzten Beschichtungsrichtungen verwendet werden kann.

Während in dem obigen Ausführungsbeispiel beide Beschichtungswalzen höhenverstellbar ausgebildet sind, ist es auch ausreichend, wenn nur eine Beschichtungswalze höhenverstellbar ausgebildet ist. Dabei muss aber sichergestellt sein, dass je nach Beschichtungsrichtung die jeweils hinten liegende Beschichtungswalze näher an der Arbeitsebene angeordnet ist als die jeweils vorne liegende Beschichtungswalze. Die Einstellung der richtigen Abstände der Beschichtungswalzen vom Baufeld kann in diesem Fall beispielsweise durch eine zusätzliche Höhenverstellbarkeit der gesamten Beschichtungseinheit erzielt werden. Während in dem obigen Ausführungsbeispiel die jeweils hintere Beschichtungswalze zum Verdichten der von der jeweils vorderen Beschichtungswalze ausgezogenen Pulverschicht dient, kann sie auch zum weiteren Glätten der Pulverschicht oder lediglich zu einer weiteren Verringerung der Schichtdicke dienen. Anstelle einer gleichlaufend angetriebenen Bewegung kann die jeweils hintere Beschichtungswalze auch stillstehen oder gegenläufig angetrieben werden.

Während in dem obigen Ausführungsbeispiel jede Schicht nach dem Aufbringen selektiv verfestigt wird, können auch zwei oder mehr Schichten aufgebracht werden, ohne dass zwischendurch verfestigt wird, und diese Schichten dann gemeinsam verfestigt werden.

Während in dem obigen Ausführungsbeispiel die Beschichtung abwechselnd in der ersten und zweiten Beschichtungsrichtung erfolgt, kann sie auch immer in derselben Beschichtungsrichtung erfolgen, z.B. immer in der ersten Beschichtungsrichtung.

Auch wenn die vorliegende Offenbarung anhand einer Lasersinterbzw. Laserschmelzvorrichtung beschrieben wurde, ist sie nicht auf das Lasersintern oder Laserschmelzen eingeschränkt. Sie kann auf beliebige Verfahren zum generativen Herstellen eines dreidimensionalen Objektes durch schichtweises Aufbringen und selektives Verfestigen eines Aufbaumaterials angewendet werden. Der Belichter kann beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), oder eine Zeile dieser Laser umfassen. Allgemein kann als Belichter jede Einrichtung verwendet werden, mit der Energie als Wellen- oder Teilchenstrahlung selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen. Statt des Ablenkens eines Strahls kann auch das Belichten mit einem verfahrbaren Zeilenbelichter angewendet werden. Auch auf das selektive Maskensintern, bei dem eine ausgedehnte Lichtquelle und eine Maske verwendet werden, oder auf das High-Speed-Sintern (HSS), bei dem auf dem Aufbaumaterial selektiv ein Material aufgebracht wird, das die Strahlungsabsorption an den entsprechenden Stellen erhöht (Absorptionssintern) oder verringert (Inhibitionssintern), und dann unselektiv großflächig oder mit einem verfahrbaren Zeilenbelichter belichtet wird, kann die Erfindung angewendet werden.

Anstelle des Einbringens von Energie kann das selektive Verfestigen des aufgetragenen Aufbaumaterials auch durch 3D-Drucken erfolgen, beispielsweise durch Aufbringen eines Klebers. Allgemein bezieht sich die Erfindung auf das generative Herstellen eines Objekts mittels schichtweisen Auftragens und selektiven Verfestigens eines Aufbaumaterials unabhängig von der Art und Weise, in der das Aufbaumaterial verfestigt wird.

Als Aufbaumaterial können verschiedene Materialien verwendet werden, vorzugsweise Pulver, insbesondere Metallpulver, Kunststoffpulver, Keramikpulver, Sand, gefüllte oder gemischte Pulver.

## Patentansprüche

1. Beschichtungsverfahren zur Durchführung in einer Vorrichtung (1) zum generativen Herstellen eines dreidimensionalen Objekts (2) durch selektives schichtweises Verfestigen eines Aufbaumaterials (15), vorzugsweise eines Pulvers, wobei die Vorrichtung (1) einen über ein Baufeld (8) bewegbaren Beschichter (16) zum Aufbringen einer Schicht (31b, 32b) des Aufbaumaterials (15) innerhalb des Baufelds (8) und eine Verfestigungsvorrichtung (20) zum selektiven Verfestigen der aufgebrachten Schicht (31b, 32b) an Stellen, die einem Querschnitt des herzustellenden Objekts (2) entsprechen, enthält und dazu ausgebildet und/oder gesteuert ist, die Schritte des Aufbringens und des selektiven Verfestigens zu wiederholen, bis das Objekt (2) fertiggestellt ist,
wobei der Beschichter eine Beschichtungseinheit (40) enthält und als Beschichtungseinheit (40) eine solche Beschichtungseinheit verwendet wird, die zwei in einer ersten Richtung (B1) voneinander beabstandete und sich in eine zweite Richtung quer, vorzugsweise senkrecht zu der ersten Richtung erstreckende Beschichtungswalzen (41, 42) enthält, und mindestens eine der, bevorzugt beide, Beschichtungswalze(n) (41, 42) in einer senkrecht zu der ersten und der zweiten Richtung verlaufenden dritten Richtung verstellt werden,
wobei eine Beschichtungswalze (41, 42) und/oder beide Beschichtungswalzen (41, 42) dergestalt in der dritten Richtung verstellt werden, dass in einer ersten Stellung eine erste (42) der zwei Beschichtungswalzen (41, 42) weiter in die dritte Richtung vorsteht als die zweite (41) Beschichtungswalze (41, 42) und in einer zweiten Stellung die zweite Beschichtungswalze (41) weiter in die dritte Richtung vorsteht als die erste Beschichtungswalze (42) und
wobei die Beschichtungseinheit (40) so ausgebildet ist, dass sie je nach Bewegung der Beschichtungseinheit (40) in die erste Richtung (B1) oder in ihre Gegenrichtung (B2) Aufbaumaterial (15) mit der in der jeweiligen Bewegungsrichtung vorlaufenden Beschichtungswalze (41, 42) zu einer gleichmäßigen Schicht (31a, 32a) auszieht und die ausgezogenen Schicht mit der in der jeweiligen Bewegungsrichtung nachlaufenden Beschichtungswalze (41, 42) verdichtet und wobei
je nach Bewegung der Beschichtungseinheit (41) in die erste Richtung (B1) oder in ihre Gegenrichtung (B2) die in der jeweiligen Bewegungsrichtung nachlaufenden Beschichtungswalze (41, 42) näher an der Arbeitsebene angeordnet wird als die vorlaufende Beschichtungswalze (41, 42) und wobei Höheneinstellungen der Beschichtungswalzen (41, 42) bei einer Richtungsumkehr des Beschichters (16) vertauscht werden.

2. Verfahren gemäß Anspruch 1, bei dem der Drehsinn jeder Beschichtungswalze (41, 42) so gewählt ist, dass jede Beschichtungswalze, wenn sie die in der jeweiligen Bewegungsrichtung vorlaufenden Beschichtungswalze ist, sich gegenläufig zu der jeweiligen Bewegungsrichtung (B1, B2) dreht.

3. Verfahren gemäß Anspruch 1 oder 2, bei dem der Drehsinn jeder Beschichtungswalze (41, 42) so gewählt ist, dass jede Beschichtungswalze, wenn sie die in der jeweiligen Bewegungsrichtung nachlaufenden Beschichtungswalze ist, stillsteht oder sich gleichläufig zu der jeweiligen Bewegungsrichtung (B1, B2) dreht.

4. Verfahren nach einem der Ansprüche 1 bis 3, wobei die beiden Beschichtungswalzen (41, 42) denselben Durchmesser aufweisen.

5. Verfahren nach einem der Ansprüche 1 bis 4, wobei die beiden Beschichtungswalzen (41, 42) unabhängig voneinander antreibbar in der Beschichtungseinheit (40) angeordnet sind.

6. Verfahren nach einem der Ansprüche 1 bis 5, wobei die beiden Beschichtungswalzen (41, 42) in ihrer Bewegung in oder gegen die dritte Richtung miteinander gekoppelt in der Beschichtungseinheit (40) angeordnet sind.

7. Verfahren nach einem der Ansprüche 1 bis 6, wobei die Beschichtungseinheit (40) ein auswechselbares Beschichtungsmodul umfasst.

8. Verfahren nach einem der Ansprüche 1 bis 7, wobei die Vorrichtung (1) ferner eine Einrichtung zum Auftragen von Aufbaumaterial (15) in der jeweiligen Bewegungsrichtung (B1, B2) vor der vorlaufenden Walze (41, 42) enthält.

9. Verfahren nach einem der Ansprüche 1 bis 8, wobei die Beschichtungseinheit (40) so in der Vorrichtung (40) angeordnet ist, dass die erste Richtung die Bewegungsrichtung (B1) des Beschichters (16) über das Baufeld (8) ist und die dritte Richtung im Wesentlichen die Vertikale ist.

10. Verfahren zum generativen Herstellen eines dreidimensionalen Objekts (2) durch schichtweises selektives Verfestigen eines Aufbaumaterials (15), vorzugsweise eines Pulvers, mit den Schritten:
Aufbringen einer Schicht (31b, 32b) des Aufbaumaterials innerhalb eines Baufelds (8) mittels eines über das Baufeld fahrenden Beschichters (16),
selektives Verfestigen der aufgebrachten Schicht (31b, 32b) an Stellen, die einem Querschnitt des herzustellenden Objekts (2) entsprechen, mittels einer Verfestigungsvorrichtung (20) und
Wiederholen der Schritte des Aufbringens und des selektiven Verfestigens, bis das Objekt (2) fertiggestellt ist,
wobei das Aufbringen mithilfe eines Verfahrens gemäß einem der Ansprüche 1 bis 9 durchgeführt wird.

## Claims

1. A recoating method to be carried out in a device (1) for additive manufacturing of a three-dimensional object (2) by selectively solidifying a building material (15), preferably a powder, layer by layer, wherein the device (1) comprises a recoater (16) movable across a build area (8) for applying a layer (31b, 32b) of the building material (15) within the build area (8) and a solidification device (20) for selectively solidifying the applied layer (31b, 32b) at positions corresponding to a cross-section of the object (2) to be manufactured and is configured and/or controlled to repeat the steps of applying and selectively solidifying until the object (2) is completed,
wherein the recoater comprises a recoating unit (40) and as a recoating unit (40) such a recoating unit is used which comprises two recoating rollers (41, 42) spaced apart from each other in a first direction (B1) and extending in a second direction transverse, preferably perpendicular, to the first direction, and at least one of the recoating rollers (41, 42), preferably both of the recoating rollers (41, 42), are adjusted in a third direction perpendicular to the first direction and the second direction, wherein
one recoating roller (41, 42) and/or both of the recoating rollers (41, 42) are adjusted in the third direction such that in a first position a first one (42) of the two recoating rollers (41, 42) projects further into the third direction than the second (41) recoating roller (41, 42), and in a second position the second recoating roller (41) projects further into the third direction than the first recoating roller (42), and
wherein the recoating unit (40) is configured such that, depending on the movement of the recoating unit (40) in the first direction (B1) or in its opposite direction (B2), it draws out building material (15) with the recoating roller (41, 42) that is the leading one in the respective direction of movement to form a uniform layer (31a, 32a), and that it compacts the drawn-out layer with the recoating roller (41, 42) that is the trailing one in the respective direction of movement, and wherein
depending on a movement of the recoating unit (41) in the first direction (B1) or in its opposite direction (B2), the recoating roller (41, 42) that is the trailing one in the respective direction of movement is arranged closer to the working plane than the recoating roller (41, 42) that is the leading one, and wherein height adjustments of the recoating rollers (41, 42) are exchanged at a reversal of the direction of the recoater (16).

2. The method according to claim 1, wherein the rotational direction of each of the recoating rollers (41, 42) is selected such that each recoating roller, when it is the leading recoating roller in the respective direction of movement, rotates in a contra-rotating way with regard to the respective direction of movement (B1, B2).

3. The method according to claim 1 or 2, wherein the rotational direction of each of the recoating rollers (41, 42) is selected such that each recoating roller, when it is the trailing recoating roller in the respective direction of movement, stands still or rotates in a co-rotating way with regard to the respective direction of movement (B1, B2).

4. The method according to one of claims 1 to 3, wherein the two recoating rollers (41, 42) have the same diameter

5. The method according to one of claims 1 to 4, wherein the two recoating rollers (41, 42) are arranged in the recoating unit (40) to be drivable independently of each other.

6. The method according to one of claims 1 to 5, wherein the two recoating rollers (41, 42) are arranged in the recoating unit (40) coupled to each other with regard to their movement in or opposite to the third direction.

7. The method according to one of claims 1 to 6, wherein the recoating unit (40) comprises an exchangeable recoating module.

8. The method according to one of claims 1 to 7, wherein the device (1) further comprises a device for applying building material (15) in front of the roller (41, 42) that is the leading one in the respective direction of movement (B1, B2).

9. The method according to one of claims 1 to 8, wherein the recoating unit (40) is arranged within the device (1) such that the first direction is the direction of movement (B1) of the recoater (16) across the build area (8) and the third direction is substantially the vertical direction.

10. A method for additive manufacturing of a three-dimensional object (2) by selectively solidifying a building material (15), preferably a powder, layer by layer, comprising the steps of:
applying a layer (31b, 32b) of the building material within a build area (8) by means of a recoater (16) moving across the build area,
selectively solidifying the applied layer (31b, 32b) at positions corresponding to a cross-section of the object (2) to be manufactured, by means of a solidification device (20) and
repeating the steps of applying and selectively solidifying until the object (2) is completed,
wherein applying is carried out by means of a method according to one of claims 1 to 9.

## Revendications

1. Procédé d'enduction destiné à être mis en oeuvre dans un dispositif (1) pour la fabrication additive d'un objet tridimensionnel (2) en solidifiant sélectivement couche par couche un matériau de construction (15), de préférence une poudre, dans lequel le dispositif (1) comprend un enducteur (16) déplaçable à travers une région de construction (8) pour appliquer une couche (31b, 32b) du matériau de construction (15) dans la région de construction (8) et un dispositif de solidification (20) pour solidifier sélectivement la couche appliquée (31b, 32b) à des positions correspondant à une section transversale de l'objet (2) à fabriquer et est configuré et/ou commandé pour répéter les étapes d'application et de solidification sélective jusqu'à ce que l'objet (2) soit complété,
dans lequel le dispositif d'enduction comprend une unité d'enduction (40) et, en tant qu'unité d'enduction (40), on utilise une telle unité d'enduction qui comprend deux rouleaux d'enduction (41, 42) espacés l'un de l'autre dans une première direction (B1) et s'étendant dans une deuxième direction transversale, de préférence perpendiculaire, à la première direction, et au moins un des rouleaux d'enduction (41, 42), de préférence les deux rouleaux d'enduction (41, 42), sont ajustés dans une troisième direction perpendiculaire à la première direction et à la deuxième direction,
dans lequel un rouleau d'enduction (41, 42) et/ou les deux rouleaux d'enduction (41, 42) sont ajustés dans la troisième direction de telle sorte que, dans une première position, un premier (42) des deux rouleaux d'enduction (41, 42) fait saillie plus loin dans la troisième direction que le deuxième (41) rouleau d'enduction (41, 42), et dans une deuxième position, le deuxième rouleau d'enduction (41) fait saillie plus loin dans la troisième direction que le premier rouleau d'enduction (42), et
dans lequel l'unité d'enduction (40) est configurée de telle sorte que, en fonction du mouvement de l'unité d'enduction (40) dans la première direction (B1) ou dans la direction opposée (B2), elle extrait le matériau de construction (15) avec le rouleau d'enduction (41, 42) qui est l'avant dans la direction de déplacement respective pour former une couche uniforme (31a, 32a), et qu'elle compacte la couche extraite avec le rouleau d'enduction (41, 42) qui est l'arrière dans la direction de déplacement respective, et dans lequel
en fonction d'un mouvement de l'unité d'enduction (41) dans la première direction (B1) ou dans sa direction opposée (B2), le rouleau d'enduction (41, 42) qui est l'arrière dans la direction de déplacement respective est disposé plus près du plan de travail que le rouleau d'enduction (41, 42) qui est l'avant, et dans lequel les ajustements de hauteur des rouleaux d'enduction (41, 42) sont échangés lors d'une inversion de la direction de l'enducteur (16).

2. Procédé selon la revendication 1, dans lequel le sens de rotation de chacun des rouleaux d'enduction (41, 42) est choisi de telle sorte que chaque rouleau d'enduction, lorsqu'il est le rouleau d'enduction avant dans la direction de déplacement respective, tourne de manière contrarotative par rapport à la direction de déplacement respectif (B1, B2).

3. Procédé selon la revendication 1 ou 2, dans lequel le sens de rotation de chacun des rouleaux d'enduction (41, 42) est sélectionné de telle sorte que chaque rouleau d'enduction, lorsqu'il est le rouleau d'enduction arrière dans la direction de déplacement respective, reste immobile ou tourne de manière co-rotative par rapport à la direction de déplacement respective (B1, B2).

4. Le procédé selon l'une des revendications 1 à 3, dans lequel les deux rouleaux d'enduction (41, 42) ont le même diamètre.

5. Procédé selon l'une des revendications 1 à 4, dans lequel les deux rouleaux d'enduction (41, 42) sont disposés dans l'unité d'enduction (40) de telle sorte qu'ils peuvent être entraînés indépendamment l'un de l'autre.

6. Procédé selon l'une des revendications 1 à 5, dans lequel les deux rouleaux d'enduction (41, 42) sont disposés dans l'unité d'enduction (40) couplés l'un à l'autre en ce qui concerne leur déplacement dans ou à l'opposé de la troisième direction.

7. Procédé selon l'une des revendications 1 à 6, dans lequel l'unité d'enduction (40) comprend un module d'enduction interchangeable.

8. Procédé selon l'une des revendications 1 à 7, dans lequel le dispositif (1) comprend en outre un dispositif d'application de matériau de construction (15) devant le rouleau (41 , 42) qui est l'avant dans la direction de déplacement respective (B1 , B2).

9. Procédé selon l'une des revendications 1 à 8, dans lequel l'unité d'enduction (40) est disposée dans le dispositif (1) de telle sorte que la première direction est la direction de déplacement (B1) de l'enducteur (16) à travers la région de construction (8) et la troisième direction est essentiellement la direction verticale.

10. Procédé de fabrication additive d'un objet tridimensionnel (2) par solidification sélective couche par couche d'un matériau de construction (15), de préférence une poudre, comprenant les étapes :
appliquer une couche (31b, 32b) du matériau de construction dans une région de construction (8) au moyen d'un enducteur (16) se déplaçant à travers la région de construction,
solidifier sélectivement la couche appliquée (31b, 32b) à des positions correspondant à une section transversale de l'objet (2) à fabriquer, au moyen d'un dispositif de solidification (20) et
répéter les étapes d'application et de solidification sélective jusqu'à ce que l'objet (2) soit complété,
dans lequel l'application est effectuée au moyen d'un procédé selon l'une des revendications 1 à 9.
